# EUROPÄISCHE PATENTSCHRIFT

(11) **EP 0 939 262 B1**
(45) Veröffentlichungstag und Bekanntmachung des Hinweises auf die Patenterteilung: **03.12.2003**
(21) Anmeldenummer: 99100746.9
(22) Anmeldetag: 16.01.1999
(51) Int. Cl.: F16L 11/22

(54) **Flexibler Rohrverbund**
Flexible conduit bundle
Faisceau flexible de tuyaux

(30) Priorität: 25.02.1998 DE 29803338 U
(43) Veröffentlichungstag der Anmeldung: 01.09.1999
(73) Patentinhaber: REHAU AG + Co, 95111 Rehau (DE)
(72) Erfinder: Döll, Achim, 90475 Nürnberg (DE)

(56) Entgegenhaltungen:
- EP-A- 0 881 730
- DE-B- 1 190 271
- GB-A- 2 268 635

## Beschreibung

Die Erfindung betrifft einen flexiblen Rohrverbund aus einzelnen Kunststoffrohren, wobei die Einzelrohre nach ihrer Herstellung derart zusammengefaßt sind, daß die untereinander benachbarten Rohre längsverlaufend linienförmig aneinanderliegen und als Rohrbündel von einer Deckschicht umgeben sind.

Ein gattungsgemäßer Rohrverbund ist aus der DE 33 08 482 C2 bekannt. Die im dort beschriebenen Rohrverbund eingesetzte Deckschicht ist mit den zugeordneten Wandbereichen der Einzelrohre durchgehend längsverlaufend fest verbunden. Dadurch wird erreicht, daß die Einzelrohre des Verbundes fest miteinander verhaftet und doch so flexibel aneinander gehalten sind, daß ein Aufwickeln des Rohrverbundes auf Wickeltrommeln genauso möglich ist wie das ungehinderte Einziehen des Rohrverbundes in Schutzrohre, z. B. in Kabelkanäle. Diese feste Verbindung der Deckschicht mit den zugeordneten Wandbereichen der Einzelrohre kann durch Aufschrumpfen und/oder durch Kleben und/oder durch Schweißen erfolgen.

Ein weiterer flexibler Rohrverbund ist aus der EP 0 235 576 B1 bekannt. Dieser Rohrverbund besteht aus einer Anzahl parallel zueinander verlaufender, gebündelter Kunststoffrohre, wobei die einzelnen Rohre des Rohrbündels durch Verbindungsmittel zusammengefaßt sind. Diese Verbindungsmittel sind längsverlaufende flexible Bänder, die annähernd tangential an außenliegenden Umfangsbereichen benachbarter Einzelrohre derart angelenkt sind, daß die Einzelrohre in gestrecktem Zustand der Bänder innerhalb des Rohrbündels in definiertem Abstand zueinander stehen. Mit dieser Maßnahme wird die Flexibilität des geschlossenen Rohrverbundes zusätzlich erhöht, so daß die beim Einzug in ein Schutzrohr auftretenden Reibungskräfte besser kompensiert und damit niedriger gehalten werden können.

Gegenüber diesem Stand der Technik hat sich die Erfindung die Aufgabe gestellt, die Flexibilität des Gesamtrohrverbundes weiter zu erhöhen sowie die Herstellung zu vereinfachen.

Erfindungsgemäß wird dazu vorgeschlagen, daß wenigstens zwei Einzelrohre über die Deckschicht zu einzelnen Rohrbündeln zusammengefaßt sind und daß wenigstens zwei dieser Rohrbündel über einen flexiblen Verbindungssteg zu einem Mehrfachrohrbündel verbunden sind. Die Deckschicht kann dabei - wie bekannt - durch Aufschrumpfen und/oder Kleben und/oder Schweißen auf die zugeordneten Außenbereiche der wenigstens zwei Einzelrohre aufgebracht werden.

Vorteilhaft weist die Deckschicht eines der Rohrbündel wenigstens einen, nach außen weisenden, stegartigen Fortsatz auf, welcher mit dem stegartigen Fortsatz des benachbarten Rohrbündels zu dem Verbindungssteg verbunden ist. Diese Verbindung kann durch Kleben oder Schweißen erfolgen. Hierbei ist von Vorteil, daß die Deckschicht benachbarter Rohrbündel einschließlich des Verbindungssteges einstückig ist, so daß beispielsweise bei einer Schweißverbindung der stegartigen Fortsätze eine einstückige Verbindung der Deckschichten der einzelnen Rohrbündel über den Verbindungssteg geschaffen ist.

Der Rohrverbund kann darüber hinaus auch in einem einheitlichen Ummantelungswerkzeug gefertigt werden, in dem neben der Ummantelung der jeweiligen Rohrbündel der Verbindungssteg einstückig miterzeugt wird. Auf diese Weise wird der zusätzliche Konfektionsarbeitsgang der Verschweißung der stegartigen Fortsätze vermieden.

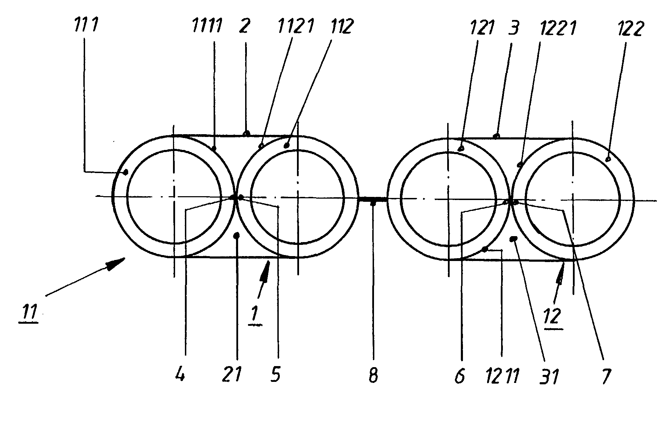

In der Zeichnung ist ein Ausführungsbeispiel des erfindungsgemäßen Rohrverbundes 1 schematisch dargestellt. Der Rohrverbund besteht aus den beiden Rohrbündeln 11, 12, die in der gezeigten Darstellung aus jeweils zwei Einzelrohren 111, 112, 121, 122 zusammengefaßt sind. Die Einzelrohre 111, 112 und 121, 122 der einzelnen Rohrbündel 11, 12 sind jeweils durch die Deckschichten 2, 3 zusammengefaßt. Diese Zusammenfassung erfolgt beispielsweise durch Umschrumpfen, Schweißen oder Kleben, wobei die Deckschichten 2, 3 sich bereichsweise um die äußeren Umfangsflächen der Einzelrohre 111, 112, 121, 122 herumlegen. Dabei bleiben die in den lichten Innenraum 21, 31 ragenden Umfangsflächen 1111, 1121, 1211, 1221 frei von der Umschlingung der Deckschicht.

Auch die Anlagebereiche 4, 5, 6, 7 der Einzelrohre 111, 112, 121, 122 sind nicht miteinander verbunden und liegen lediglich durch die Spannung der Deckschichten 2, 3 linienförmig im einzelnen Rohrbündel 11, 12 aneinander an.

Die Rohrbündel 11, 12 sind über den flexiblen Verbindungssteg 8 miteinander verbunden. Dafür erhält jedes einzelne Rohrbündel 11, 12 bei der Umschlingung der wenigstens zwei Einzelrohre 111, 112, 121, 122 mit der zugeordneten Deckschicht 2, 3 einen nach außen weisenden stegartigen Fortsatz, der in der Länge dem Verbindungssteg 8 entspricht. Diese stegartigen Fortsätze werden anschließend miteinander verbunden, wobei diese Verbindung durch Schweißen oder Kleben erfolgen kann. Dadurch werden die einzelnen Rohrbündel 11, 12 des Rohrverbundes 1 fest, aber flexibel miteinander verbunden. Diese Flexibilität wird in erster Linie durch den flexiblen Verbindungssteg geschaffen, der ein Abknicken der einzelnen Rohrbündel 11, 12 bis über 90° hinaus erlaubt. Aber auch die innerhalb der einzelnen Rohrbündel 11, 12, bestehende Flexibilität der mit der Deckschicht 2, 3 teilumhüllten Einzelrohre 111, 112, 121, 122 trägt zur Gesamtflexibilität des Rohrverbundes 1 bei. Diese "interne" Flexibilität der Rohrbündel 11, 12 wird dadurch bewirkt, daß die Deckschicht praktisch nur den nach außen weisenden Umfangsbereich der Einzelrohre 111, 112, 121, 122 umfaßt und daß er nach innen zum Lumen 21, 31 der so geschaffenen Rohrbündel 11, 12 gerichtete Umfangsbereich 1111, 1121, 1211, 1221 frei von solcher Umschlingung ist. Aufgrund der Tatsache, daß auch die Berührungspunkte 4, 5, 6, 7 der Einzelrohre 111, 112, 121, 122 in den einzelnen Rohrbündeln 11, 12 nicht miteinander fest verbunden sind, sondern innerhalb der Rohrbündel 11, 12 linienförmig aneinander anliegen, ist auch hier die Möglichkeit gegeben, daß die Einzelrohre 111, 112, 121, 122 an ihren Berührungspunkten 4, 5, 6, 7 in begrenztem Maße gegeneinander beweglich sind, wobei die Berührungslinien an den Berührungspunkten 4, 5, 6, 7 in der von der Deckschicht 2, 3 zugelassenen Flexibilität der einzelnen Rohrbündel aufeinander abrollen können. Die Kombination dieser beiden Flexibilitäten schafft die erhöhte Flexibilität des erfindungsgemäßen Rohrverbundes gegenüber dem bekannten Stand der Technik.

## Patentansprüche

1. Flexibler Rohrverbund aus einzelnen Kunststoffrohren (111,112,121,122), wobei die Einzelrohre nach ihrer Herstellung derart zusammengefaßt sind, daß die untereinander benachbarten Rohre längsverlaufend linienförmig aneinander anliegen und als Rohrbündel (11,12) von einer Deckschicht (2,3) umgeben sind, **dadurch gekennzeichnet, daß** wenigstens zwei Einzelrohre (111, 112, 121, 122) über die Deckschicht (2, 3) zu einzelnen Rohrbündeln (11, 12) zusammengefaßt sind und daß wenigstens zwei dieser Rohrbündel (11, 12) über einen flexiblen Verbindungssteg (8) zu einem Mehrfachrohrbündel (1) verbunden sind.

2. Rohrverbund nach Anspruch 1, **dadurch gekennzeichnet, daß** die Deckschicht (2, 3) eines Rohrbündels (11, 12) wenigstens einen, nach außen weisenden, stegartigen Fortsatz aufweist, welcher mit dem stegartigen Fortsatz des benachbarten Rohrbündels (11, 12) zu dem Verbindungssteg (8) verbunden ist.

3. Rohrverbund nach Anspruch 1, **dadurch gekennzeichnet, daß** die Deckschicht (2, 3) benachbarter Rohrbündel (11, 12) einschließlich des Verbindungssteges (8) einstückig ist.

## Claims

1. Flexible composite pipe made of individual plastic tubes (111, 112, 121, 122) in which the individual tubes are joined after their manufacture such that the adjacent tubes lie longitudinally against each other and are encased as a pipe bundle (11, 12) by a covering layer (2, 3), **characterised by**: At least two individual tubes (111, 112, 121, 122) are joined by the covering layer (2, 3) to individual pipe bundles (11, 12) and at least two of these pipe bundles (11, 12) are connected by a flexible connecting web (8) to form a multiple pipe bundle (1 ).

2. Composite pipe according to Claim 1, **characterised by**: The covering layer (2, 3) of a pipe bundle (11, 12) has at least one web projecting outwards which is attached to the projecting web of the adjacent pipe bundle (11, 12) to form the connecting web (8).

3. Composite pipe according to Claim 1, **characterised by**: The covering layers (2, 3) of adjacent pipe bundles (11, 12) and including the connecting web (8) are made in one piece.

## Revendications

1. Assemblage de tubes flexible composé de tubes individuels en matière plastique (111, 112, 121, 122), ces tubes individuels étant assemblés après leur fabrication de telle manière que les tubes voisins se contactent longitudinalement de manière linéaire et étant entourés d'une couche de recouvrement (2, 3) sous forme de faisceau de tubes (11, 12), **caractérisé en ce qu'**au moins deux tubes individuels (111, 112, 121, 122) sont assemblés par la couche de recouvrement (2, 3) en faisceaux de tubes individuels (11, 12) et qu'au moins deux de ces faisceaux de tubes (11, 12) sont assemblés en faisceau multiple (1) par une entretoise de liaison (8).

2. Assemblage de tubes flexible selon la revendication 1, **caractérisé en ce que** la couche de recouvrement (2, 3) d'un faisceau de tubes (11, 12) présente au moins un prolongement en forme d'entretoise dirigé vers l'extérieur, qui est raccordé avec le prolongement en forme d'entretoise du faisceau de tubes voisin (11, 12) en une entretoise de liaison (8).

3. Assemblage de tubes flexible selon la revendication 1, **caractérisé en ce que** la couche de recouvrement (2, 3) de faisceaux de tubes voisins (11, 12) est d'un seul tenant y compris l'entretoise de liaison (8).
